# EUROPÄISCHE PATENTSCHRIFT

(11) **EP 2 662 183 B1**
(45) Veröffentlichungstag und Bekanntmachung des Hinweises auf die Patenterteilung: **08.04.2015**
(21) Anmeldenummer: 13002415.1
(22) Anmeldetag: 06.05.2013
(51) Int. Cl.: B23Q 11/00, B23Q 11/10

(54) **Bearbeitungsmaschine**
Machining unit
Machine de traitement

(30) Priorität: 08.05.2012 DE 102012008900; 08.05.2012 DE 202012004436 U
(43) Veröffentlichungstag der Anmeldung: 13.11.2013
(73) Patentinhaber: MLS Lanny GmbH, 75323 Bad Wildbad (DE)
(72) Erfinder: Lanny, Michael, 75323 Bad Wildbad (DE)
(74) Vertreter: Leitner, Waldemar

(56) Entgegenhaltungen:
- EP-A1- 1 270 093
- EP-A1- 2 168 715
- US-B1- 7 410 569

## Beschreibung

Die Erfindung betrifft eine Bearbeitungsmaschine zur Bearbeitung eines Werkstücks mit einem spanenden Bearbeitungswerkzeug, wobei zumindest dem Bearbeitungswerkzeug ein einen von einer Kühlmittelpumpe angetriebenen Kühlmittelkreislauf durchströmendes Kühlmittel zurückgeführt ist, die einen Späneförderer zum Abtransport eines Anteils der beim spanenden Bearbeitungsprozess des Werkstücks auftretenden Späne, ein unterhalb des Späneförderers angeordnetes Maschinenbett, in welchem ein Anteil der beim Bearbeitungsprozess des Werkstücks entstanden und nicht vom Späneförderer abtransportierten Späne und das Kühlmittel aufnehmbar ist, und eine Kühlmittelpumpe sowie eine dieser im Kühlmittelkreislauf vorgeschaltete Trenneinheit, mittels derer das im Maschinenbett befindliche Kühlmittel durch die Trenneinrichtung ansaugbar ist, aufweist.

Eine derartige Bearbeitungsmaschine ist bekannt und dient zur spanenden Bearbeitung eines Werkstücks mittels eines spanabhebenden Bearbeitungswerkzeugs. Die dabei anfallenden Späne werden zu dem Späneförderer gespült und von diesem aus der Bearbeitungsmaschine abtransportiert. Hierbei tritt das Problem auf, dass kleine oder kleinere Späne vom Späneförderer nicht abtransportiert werden, da sie z. B. durch die Glieder des Späneförderers fallen, sich im darunter liegenden Maschinenbett der Bearbeitungsmaschine aufstauen und den Späneförderer dann verstopfen. Dies hat zur Folge, dass der Späneförderer in regelmäßigen Abständen gereinigt werden muss, was zu einem Maschinenstillstand und somit zu Ausfallzeiten der Bearbeitungsmaschine führt.

Des weiteren verstopfen diese Späne die Trenneinheit im Kühlmittelkreislauf der Bearbeitungsmaschine, welche vor den Kühlmittelkreislauf bewirkenden Kühlmittelpumpen angeordnet ist, um diese vor den ihm Kühlmittel befindlichen Spänen zu schützen. Die Kühlmittelpumpen können dann nicht mehr die erforderliche Menge des Kühlmittels umwälzen. Da nicht mehr eine hinreichende Menge des Kühlmittels aus dem Maschinenbett abgeführt werden kann, droht die Gefahr, dass das im Maschinenbett befindliche Kühlmittel überläuft. Gehen die Verstopfungen der Trenneinheit über ein bestimmtes Maß hinaus, so schalten sich Kühlmittelpumpen aus Sicherheitsgründen ab, was wiederum zu einem Maschinenstillstand führt.

Die DE 20 2009 009 535 U1 beschreibt eine Vorrichtung zur Aufbereitung von Kühlschmierstoffen und Spänen für Werkzeugmaschinen. Diese weist einen Behälter zur Aufnahme des unbehandelten Gemisches aus Kühlschmierflüssigkeit und Feststoffen, einen in diesem Behälter installierten Endlosförderer für einen Abtransport der gesammelten Feststoffe aus dem Behälter sowie eine ebenfalls in diesem Behälter angeordneten Filtriereinheit zum Trennen der Kühlschmierflüssigkeit von den Feststoffen auf. Es ist vorgesehen, dass die Filtriereinheit mobil ausgebildet und als Einschub in den Behälter oberhalb eines Untertrums des Endlosförderers positionierbar ist. Hierdurch soll ein Verstopfen der nachgeordneten Filter durch Verschmutzungen im Kühlmittel vermieden werden. Die Ausbildung der Filtriereinheit als eigenständige Baugruppe bewirkt, dass die Filtriereinheit auf einfachste Weise aus der Vorrichtung herausgenommen, gereinigt und anschließend wieder an ihren ursprünglichen Platz in der Vorrichtung eingeschoben werden kann.

Die DE 87 17 994 U1 beschreibt eine Reinigungsvorrichtung zum Abscheiden von Werkstückspänen oder ähnlicher Feststoffpartikel bei spanabhebenden Werkzeugmaschinen, wobei die die Werkstückspäne transportierende Flüssigkeit in einem zumindest einen Filter und wenigstens eine Umwälzpumpe aufweisenden Kreislauf geführt ist. Die Vorrichtung besitzt zwei wechselweise in Filterfunktion umschaltbare Filtereinrichtungen, wobei mittels einer Strömungsumkehr-Einrichtung die Durchströmungsrichtung der jeweiligen Filtereinrichtungen umkehrbar ist. Vor der Abströmseite wenigstens einer jeweils in Filterfunktion befindlichen Filtereinrichtung ist eine Flüssigkeitsführung zum Rückspülen und Reinigen zumindest einer jeweils anderen Filtereinrichtung vorgesehen.

Die DE 31 27 440 C2 beschreibt eine Vorrichtung zum Reinigen und Rückführen von bei spangebender Metallbearbeitung den Spänen anhaftenden Kühlschmierstoff. Die Vorrichtung weist ein endloses, umlaufendes Stahlscharnierband in einem als Späneförderer ausgebildeten Vollkastengerüst auf, das aus einem waagrechten Flachkastenteil und einem kastenartigen Aufsteigeteil besteht, welches am oberen Ende zum Abwerfen der Späne offen ist. Des weiteren weist die Vorrichtung einen Schmutzflüssigkeitsbehälter und einen diesem zugeordneten Unterdruckfilter zum Reinigen des Kühlschmierstoffes von feinen Spänen sowie einen Regenerationstank, in den der gereinigte Kühlschmierstoff mittels einer Pumpe förderbar ist, auf.

Die JP 2008-012 603 A beschreibt eine Vorrichtung zum Reinigen einer Kühlflüssigkeit einer Werkzeugmaschine, bei der verbrauchtes Kühlmittel in einem Tank gespeichert wird. In diesem Tank werden aus dem Kühlmittel Fremdstoffe wie Späne entfernt. Das Kühlmittel wird von einem Trommelfilter gefiltert und das filtrierte Kühlmittel wird zu einem weiteren Tank befördert.

Die EP 1 291 059 B1 beschreibt eine Vorrichtung zum Separieren und Austragen von Spänen, die einen Sammelbehälter aufweist, der im wesentlichen aus einem ersten, zur Aufnahme einer Arbeitsflüssigkeit geeigneten Kastenteil und einem sich daran anschließenden und unter einer Neigung ansteigenden zweiten Kastenteil mit einer oberhalb des Flüssigkeitsspiegels gelegenen Abwurfstelle besteht. Sie besitzt des weiteren einen Siebkasten, der beim Betrieb der Vorrichtung in die Arbeitsflüssigkeit im ersten Kastenteil des Behälters einbauchend angeordnet und mit einem Filter und/oder Siebmittel versehen ist. Des weiteren ist ein Späneförderer mit einem Förderorgan vorgesehen, welche im Betrieb der Vorrichtung die Späne zu der Abwurfstelle fördert.

Die EP 2 168 715 A1 beschreibt eine gattungsgemäße Bearbeitungsmaschine, die ein öl-gekühltes Bearbeitungswerkzeug zur Bearbeitung eines Werkstücks aufweist. Das mit Spänen und sonstigen Verunreinigungen durchsetzte Öl läuft zu einem durchlöcherten Behälter, in dem die groben Späne aufgefangen werden. Unter diesem Behälter ist ein weiterer Behälter oder ein Späneförderer angeordnet, welche im Wesentlichen dazu dienen, aus dem Öl diejenigen Bestandteile, die den vorgenannten perforierten Behälter durchlaufen konnten, in einem Maße abzuscheiden, dass das in das Maschinenbett gelangende Öl nurmehr sehr kleine Verunreinigungen aufweist. Dieses Öl wird dann von einer Pumpe aus dem Maschinenbett abgesaugt und einer Reinigungseinrichtung zugeführt, dort gereinigt und anschließend wieder der Bearbeitungsmaschine zugeführt.

Es ist Aufgabe der vorliegenden Erfindung, eine Bearbeitungsmaschine der eingangs genannten Art derart weiterzubilden, dass eine verbesserte Abfuhr der beim Bearbeitungsprozess auftretenden Späne aus dem Maschinenbett erreicht wird.

Diese Aufgabe wird erfindungsgemäß dadurch gelöst, dass die Bearbeitungsmaschine eine Absaugpumpe zum Absaugen eines Teils des im Maschinenbett befindlichen, mit Spänen durchsetzten Kühlmittels, sowie eine Trenneinrichtung zu der das von der Absaugpumpe abgesaugte Kühlmittel über eine Leitung führbar ist, aufweist, dass die parallel zu der den Kühlmittelkreislauf antreibenden Kühlmittelpumpe arbeitende Absaugpumpe sowie die Trenneinrichtung außerhalb des Kühlmittelkreislaufs angeordnet sind, und dass die Trenneinrichtung aus dem abgesaugten Kühlmittel zumindest einen Anteil der darin befindlichen Späne abgetrennt, und dass das derart gereinigte Kühlmittel durch eine weitere Leitung dem Kühlmittelkreislauf wieder zugeführt ist.

Durch die erfindungsgemäßen Maßnahmen wird in vorteilhafter Art und Weise eine Bearbeitungsmaschine geschaffen, welche sich dadurch auszeichnet, dass nicht nur der vom Späneförderer erfasste Anteil der beim spanenden Bearbeitungsprozess des Werkstücks durch das spanende Werkzeug anfallenden Späne aus der Bearbeitungsmaschine abtransportiert wird. Vielmehr erlauben die beschriebenen Maßnahmen in vorteilhafter Art und Weise auch den Abtransport zumindest eines Anteils der nicht vom Späneförderer erfassten und in das Maschinenbett der erfindungsgemäßen Bearbeitungsmaschine fallenden Späne. Hierdurch wird einem Anstauen dieser Späne im Maschinenbett entgegengewirkt, so dass die Gefahr einer Verstopfung des Späneförderers und/oder der vor der Kühlmittelpumpe angeordneten Trenneinheit durch diese Späne entgegengewirkt wird. Der Späneförderer, die Trenneinheit und/oder das Maschinenbett der erfindungsgemäßen Bearbeitungsmaschine müssen daher in viel größeren Zeitabständen gereinigt werden, was in vorteilhafter Art und Weise die Maschinenstillstandszeiten reduziert.

Eine vorteilhafte Weiterbildung der Erfindung sieht vor, die weitere Leitung in das Maschinenbett mündet, so dass das gereinigte Kühlmittel in das Maschinenbett der Bearbeitungsmaschine zurückgeführt wird. Eine derartige Maßnahme besitzt den Vorteil, dass das im Maschinenbett befindliche Kühlmittel-Späne-Gemisch durch die Zufuhr vom gereinigten Kühlmittel "verdünnt" wird. Die Späne-Konzentration in dem von der Absaugpumpe aus dem Maschinenbett abgesaugten Kühlmittels wird dadurch verringert, was zu einer geringen Belastung der Absaugpumpe und somit zu einer längeren Lebensdauer derselben führt.

Eine weitere vorteilhafte Weiterbildung der Erfindung sieht vor, dass die weitere Leitung im Bereich des der Absaugpumpe entgegengesetzten Endes des Maschinenbetts in dieses mündet. Eine derartige Maßnahme besitzt den Vorteil, dass hierdurch das gereinigte Kühlmittel während seines gesamten Wegs zur Absaugpumpe eine Verringerung der Konzentration der Späne im Kühlmittel bewirken kann.

Eine weitere vorteilhafte Weiterbildung der Erfindung sieht vor, dass die erfindungsgemäße Bearbeitungsmaschine eine Maschinenbettspülung aufweist. Eine derartige Maßnahme besitzt den Vorteil, dass hierdurch eine vergrößerte Abfuhr der Späne aus der Bearbeitungsmaschine erzielbar ist.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1:: eine Seitenansicht eines Ausführungsbeispiels einer Bearbeitungsmaschine, und
- Figur 2:: eine Draufsicht auf das Ausführungsbeispiel der Figur 1.

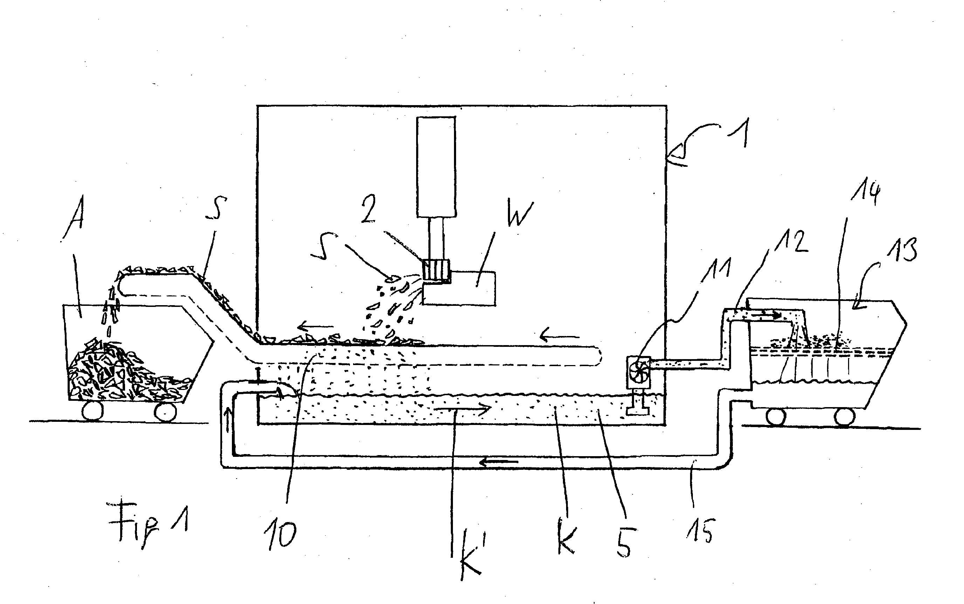

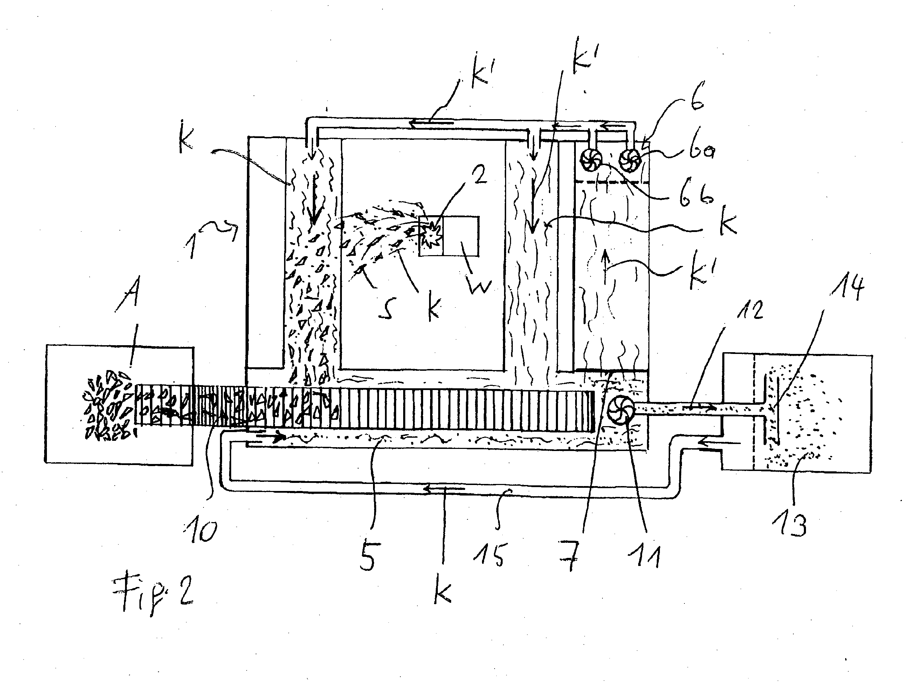

In den Figuren 1 und 2 ist nun eine allgemein mit 1 bezeichnete Bearbeitungsmaschine dargestellt, die ein Bearbeitungswerkzeug 2 zur spanenden Bearbeitung eines Werkstücks W besitzt. Das Bearbeitungswerkzeug 2 ist an und für sich bekannt und wird daher nicht mehr beschrieben. Es wird in ebenfalls bekannter Art und Weise mittels eines in einem Kühlmittelkreislauf K' umlaufenden Kühlmittels K gekühlt. Die vom Bearbeitungswerkzeug 2 vom Werkstück W abgehobenen Späne S gelangen zu einem Späneförderer 10, der im hier gezeigten Fall als ein umlaufendes Gliederband ausgebildet ist, indem sie durch eine MaschinenbettSpülung zum Späneförderer 10 hingespült werden. Die größeren Späne S werden durch den Späneförderer 10 aus der Bearbeitungsmaschine 1 abtransportiert und gelangen zu einem Aufnahmebehälter A. Die kleineren Späne fallen durch den Späneförderer 10 und gelangen zu einem Maschinenbett 5 der Bearbeitungsmaschine 1. Das Maschinenbett 5 fängt auch das vom Bearbeitungswerkzeug 2 herabtropfende Kühlmittel K auf. Um dieses aus dem wannenartig ausgebildeten Maschinenbett 5 zu entfernen und den Kühlmittelkreislauf anzutreiben, ist eine Kühlmittelpumpe 6 mit zwei Kühlmittelpumpeneinheiten 6a und 6b (siehe Figur 2) vorgesehen, welche das Kühlmittel K aus dem Maschinenbett 5 abpumpt. Dieses Kühlmittel K wird dann wieder dem Bearbeitungswerkzeug 2 zugeführt. Bei dem beschriebenen Ausführungsbeispiel der Bearbeitungsmaschine 1 ist - wie am besten aus Figur 2 ersichtlich - des weiteren vorgesehen, dass die Bearbeitungsmaschine 1 eine Maschinenbettspülung aufweist, so dass das Kühlmittel K nicht nur zum Bearbeitungswerkzeug 2 geleitet wird, sondern auch das Maschinebett 5 durchströmt und derart die Späne S aus dem Maschinenbett wegspült. Um die Kühlmittelpumpeneinheiten 6a und 6b der Kühlmittelpumpe 6 zu schützen, ist vor diesen eine vom Kühlmittel K durchströmbare, aber Späne S zurückhaltende Trenneinheit 7, z. B. ein Schott, ein Sieb oder ein Lochblech, angeordnet. Eine derartige Bearbeitungsmaschine 1 ist bekannt und muss daher nicht mehr weiter im Detail beschrieben werden.

Um nun für eine verbesserte Abfuhr der Späne S zu sorgen, ist bei der beschriebenen Bearbeitungsmaschine 1 vorgesehen, dass ein Teil des mit den Spänen S durchmischten Kühlmittels K dem Kühlmittelkreislauf K' vor der Trenneinheit 7 entnommen, die darin befindlichen Späne S aus dem Kühlmittel K zumindest teilweise entfernt und dieses Kühlmittel K wieder dem Kühlmittelkreislauf K' zugeführt wird. Eine derartige Maßnahme besitzt den Vorteil, dass durch diese Maßnahmen bei der Bearbeitungsmaschine 1 die Abfuhr der Späne S verbessert wird, da nun nicht mehr nur die durch den Späneförderer 10 abgeführten, größeren Späne S aus der Bearbeitungsmaschine 1 entfernt werden, sondern auch die nicht vom Späneförderer 10 erfassten Späne S aus dieser entfernt werden. Eine störende Ablagerung der Späne S im Maschinenbett 5, welche - wie eingangs beschrieben - dazu führt, dass das Maschinenbett 5, der Späneförderer 10 und/oder die Trenneinheit 7 verstopfen, wird somit vermieden. Es treten somit aus diesem Grund keine oder nur verringerte Maschinenausfallzeiten auf, da eine Reinigung des Späneförderers 10 und/oder der Trenneinheit 7 nun nicht oder nurmehr in größeren Abständen erforderlich ist.

Diese Maßnahme wird bei dem beschriebenen Ausführungsbeispiel dadurch umgesetzt, dass die Bearbeitungsmaschine 1 eine Absaugpumpe 11 aufweist, mit der das von den Spänen S durchsetzte Kühlmittel K aus dem Maschinenbett 5 abgepumpt und über eine Leitung 12 einer Trenneinrichtung 13, in welcher die Späne S aus dem Kühlmittel K abgetrennt werden, zugeführt wird. Die Trenneinrichtung 13 kann z. B. ein Sieb 14 sein, welches mit dem mit den Spänen S durchmischten Kühlmittel K beaufschlagt wird, wobei dann die Späne S im Sieb 14 zurückgehalten werden und das Kühlmittel K derart gereinigt wird. Dieses derart gereinigte Kühlmittel K wird über eine weitere Leitung 15 wiederum zum Maschinenbett 5 zurückgeführt. Durch die beschriebenen Maßnahmen wird erreicht, dass aus der Bearbeitungsmaschine auf die nicht vom Späneförderer 10 nicht erfassten Späne S - zumindest zu einem hohen Anteil - abtransportiert werden. Einem Anschichten der nicht vom Späneförderer 10 erfassten Späne S im Maschinenbett 5 und damit einhergehend eine Verstopfung des Späneförderers 10 und/oder der der Kühlmittelpumpe 6 vorgeschalteten Trenneinheit 7 wird dadurch entgegengewirkt. Die Zeit zwischen zwei Reinigungsintervallen wird dadurch deutlich vergrößert, was Maschinenstillstandszeiten entgegenwirkt.

Die Rückführung des gereinigten Kühlmittels K über die weitere Leitung 15 im Maschinenbett 5 besitzt den Vorteil, dass hierdurch die Konzentration der Späne S in dem im Maschinenbett 5 befindlichen Kühlmittel K verringert wird, da dieses Kühlmittel-Späne-Gemisch durch Zufuhr des gereinigten Kühlmittels K verdünnt wird. Vorzugsweise ist hierbei vorgesehen, dass die Rückführung des gereinigten Kühlmittels durch die weitere Leitung 15 an dem der Ansaugpumpe 11 gegenüberliegenden Ende des Maschinenbetts erfolgt.

Es ist natürlich auch möglich, dass anstelle oder in Ergänzung zu dieser Rückführung ins Maschinenbett 5 das Kühlmittel K an anderer Stelle wieder in den Kühlmittelkreislauf eingespeist wird.

Zusammenfassend ist festzuhalten, dass durch die beschriebenen Maßnahmen eine Bearbeitungsmaschine 1 ausgebildet wird, bei der in vorteilhafter Art und Weise nicht nur die größeren der beim Bearbeitungsprozess anfallenden Späne S vom Späneförderer 10 abtransportiert werden.

## Patentansprüche

1. Bearbeitungsmaschine zur Bearbeitung eines Werkstücks (W) mit einem spanenden Bearbeitungswerkzeug (2), wobei zumindest dem Bearbeitungswerkzeug (2) ein einen von einer Kühlmittelpumpe (6) angetriebenen Kühlmittelkreislauf (K') durchströmendes Kühlmittel (K) zurückgeführt ist, die einen Späneförderer (10) zum Abtransport eines Anteils der beim spanenden Bearbeitungsprozess des Werkstücks (W) auftretenden Späne (S), ein unterhalb des Späneförderers (10) angeordnetes Maschinenbett (5), in welchem ein Anteil der beim Bearbeitungsprozess des Werkstücks (W) entstandenen und nicht vom Späneförderer (10) abtransportierten Späne (S) und das Kühlmittel (K) aufnehmbar ist, eine Kühlmittelpumpe (6; 6a, 6b) sowie eine dieser im Kühlmittelkreislauf (K') vorgeschaltete Trenneinheit (7), mittels derer das im Maschinenbett (5) befindliche Kühlmittel (K) durch die Trenneinheit (7) ansaugbar ist, aufweist, **dadurch gekennzeichnet, dass** die Bearbeitungsmaschine (1) eine Absaugpumpe (11) zum Absaugen eines Teils des im Maschinenbett befindlichen, mit Spänen (S) durchsetzten Kühlmittels (K), sowie eine Trenneinrichtung (13) zu der das von der Absaugpumpe (11) abgesaugte Kühlmittel (K) über eine Leitung (12) führbar ist, aufweist, dass die parallel zu der den Kühlmittelkreislauf (K') antreibenden Kühlmittelpumpe (6) arbeitende Absaugpumpe (11) sowie die Trenneinrichtung (13) außerhalb des Kühlmittelkreislaufs (K') angeordnet sind, und dass die Trenneinrichtung (13) aus dem abgesaugten Kühlmittel (K) zumindest einen Anteil der darin befindlichen Späne (S) abgetrennt, und dass das derart gereinigte Kühlmittel (K) durch eine weitere Leitung (15) dem Kühlmittelkreislauf zugeführt ist.

2. Bearbeitungsmaschine nach Anspruch 1, **dadurch gekennzeichnet, dass** die Trenneinrichtung (13) ein Sieb (14) zur Abtrennung der Späne (S) aus dem Kühlmittel (K) besitzt.

3. Bearbeitungsmaschine nach einem der vorangehenden Ansprüche, **dadurch gekennzeichnet, dass** die weitere Leitung (15) in das Maschinenbett (5) mündet.

4. Bearbeitungsmaschine nach Anspruch 3, **dadurch gekennzeichnet, dass** die weitere Leitung (15) im Bereich des der Absaugpumpe (11) entgegengesetzten Endes des Maschinenbetts (5) in dieses mündet.

## Claims

1. Machining unit for processing a workpiece (W) with a machining tool (2), wherein a coolant (K) is fed at least to the machining tool (2), wherein the coolant flows through a cooling circuit (K') driven by a coolant pump (6),
comprising
a chip conveyor (10) for removing a portion of chips (S) generated during the machining process of the workpiece (W),
a machine bed (5) arranged below the chip conveyor (10), in which a portion of the chips (S) generated during the machining process of the workpiece (W) and not removed by the chip conveyor (10) and the coolant (K) can be received,
a coolant pump (6; 6a, 6b) as well as a separation unit (7) arranged upstream thereof in the coolant circuit, by means of which the coolant (K) received in the machine bed (5) can be sucked by the separation unit (7),
characterizend in that
the machining unit (1) comprises a suction pump (11) for suction of a portion of the coolant (K) received in the machine bed and interspersed with chips (S), as well as a separating device (13) to which the coolant (K) sucked by the suction pump (11) can be lead via a conduit (12);
the suction pump (11), operating in parallel to the coolant pump (C) driving the coolant circuit, as well as the separating device (13) are located outside of the coolant circuit (K'); and the separating device (13) separates at least a portion of the chips (S) contained in the sucked coolant (K),
and the thus purified coolant (K) is fed to the coolant circuit through a further conduit (15).

2. Machining unit according to claim 1, **characterized in that** the separating device (13) has a sieve (14) for separating the chips (S) from the coolant (K).

3. Machining unit according to one of the preceding claims, **characterized in that** the further conduit (15) ends in the machine bed (5).

4. Machining unit according to claim 3, **characterized in that** the further conduit (15) ends in a region of the machine bed (5), which is located oppositely to the one of the suction pump (11).

## Revendications

1. Machine d'usinage servant à usiner une pièce à usiner (W) avec un outil d'usinage par enlèvement de copeaux (2), sachant qu'un agent de refroidissement (K) traversant un circuit d'agent de refroidissement (K') entraîné par une pompe à agent de refroidissement (6) est reconduit au moins à l'outil d'usinage (2), laquelle machine d'usinage présente un convoyeur de copeaux (10) servant à évacuer une fraction des copeaux (S) se formant lors du processus d'usinage par enlèvement de copeaux de la pièce à usiner (W), un banc de machine (5) disposé sous le convoyeur de copeaux (10), dans lequel une fraction des copeaux (S) formés lors du processus d'usinage de la pièce à usiner (W) et non évacués par le convoyeur de copeaux (10) et l'agent de refroidissement peuvent être reçus, une pompe à agent de refroidissement (6, 6a, 6b) ainsi qu'une unité de séparation (7) installée en amont de ladite pompe dans le circuit d'agent de refroidissement (K'), au moyen de laquelle l'agent de refroidissement (K) se trouvant dans le banc de machine (5) peut être aspiré par l'unité de séparation (7), **caractérisée en ce que** la machine d'usinage (1) présente une pompe d'aspiration (11) servant à aspirer une partie de l'agent de refroidissement (K) se trouvant dans le banc de machine, traversés par des copeaux (S), ainsi qu'un système de séparation (13), auquel l'agent de refroidissement (K) aspiré par la pompe d'aspiration (11) peut être conduit en paissant par une conduite (12), **en ce que** la pompe d'aspiration (11) fonctionnant en parallèle de la pompe à agent de refroidissement (6) entraînant le circuit d'agent de refroidissement (K') ainsi que le système de séparation (13) sont disposés à l'extérieur du circuit d'agent de refroidissement (K'), et **en ce que** le système de séparation (13) sépare de l'agent de refroidissement (K) aspiré au moins une fraction des copeaux (S) s'y trouvant, et **en ce que** l'agent de refroidissement (K) ainsi épuré est amené par une autre conduite (15) au circuit d'agent de refroidissement.

2. Machine d'usinage selon la revendication 1, **caractérisée en ce que** le dispositif de séparation (13) comporte un tamis (14) servant à séparer les copeaux (S) de l'agent de refroidissement (K).

3. Machine d'usinage selon l'une quelconque des revendications précédentes, **caractérisée en ce que** l'autre conduite (15) débouche dans le banc de machine (5).

4. Machine d'usinage selon la revendication 3, **caractérisée en ce que** l'autre conduite (15) débouche, dans le banc de machine, dans la zone de l'extrémité, opposée à la pompe d'aspiration (11), du banc de machine (5).
